# EUROPÄISCHE PATENTANMELDUNG

(11) **EP 0 963 778 A1**
(43) Veröffentlichungstag der Anmeldung: **15.12.1999**
(21) Anmeldenummer: 98115725.8
(22) Anmeldetag: 20.08.1998
(51) Int. Cl.: B01D 53/14

(54) **Verfahren zur Trocknung und Reinigung von Luft**

(30) Priorität: 12.05.1998 DE 19821243; 20.05.1998 DE 19822766
(71) Anmelder: Linde Aktiengesellschaft, 65189 Wiesbaden (DE)
(72) Erfinder: Voit, Jürgen Dipl.-Phys., 86938 Schondorf (DE); Lauermann, Gerhard Dr., Dipl.-Chem., 83646 Bad Tölz (DE)

(57) **Zusammenfassung**

Die Erfindung betrifft ein Verfahren zur Trocknung und Reinigung atmosphärischer Luft, wobei diese Luft neben Feuchtigkeit an Verunreinigungen hauptsächlich Kohlendioxid, Kohlenwasserstoffe und Stickoxide enthält.

Erfindungsgemäß wird die atmosphärische Luft (1) auf einen Betriebsdruck der Trocknung und Reinigung verdichtet (10), wobei je nach Feuchtigkeit der Luft ein Teil der Feuchte kondensiert und aus dem Luftstrom als Wasser abgeschieden wird (20), und es werden mindestens eine Restfeuchte der Luft und die Verunreinigungen durch physikalische Wäsche (40) entfernt.

## Beschreibung

Die Erfindung betrifft ein Verfahren zur Trocknung und Reinigung atmosphärischer Luft, wobei die Luft neben Feuchtigkeit an Verunreinigungen hauptsächlich Kohlendioxid (CO₂), Kohlenwasserstoffe und Stickoxide enthält.

Eine besondere Bedeutung haben Reinigungsanlagen für atmosphärische Luft bei Tieftemperatur-Luftzerlegungs-Verfahren. Für deren Betriebssicherheit und für die Reinheit von Produkten wie Sauerstoff und Stickstoff ist es entscheidend, daß die genannten Verunreinigungen vor Eintritt in den Tieftemperaturteil einer Luftzerlegungsanlage (LZA) entfernt werden. Eine alternative Nachreinigung einzelner Produkte ist aufwendig und eine Anreicherung von u. U. reaktionsfähigen Stoffen, die teilweise auch in fester Form erfolgt, beeinträchtigt den Betrieb der LZA. Bekannt sind LZA mit selbstreinigenden Wärmeaustauschern (Revex), Laugenwäschen oder Geltrocknern und Kohlendioxidadsorbern zur Reinigung der Luft. Seit einiger Zeit werden hauptsächlich Molsiebadsorber eingesetzt, die jedoch Distickstoffmonoxid (N₂O) und Kohlenwasserstoffe (CₓH_{y}) nicht vollständig aus der Luft entfernen.

Aufgabe der Erfindung ist es deshalb, die Rückhaltung der Verunreinigungen N₂O und CₓH_{y} zusätzlich zu ermöglichen.

Diese Aufgabe wird erfindungsgemäß gelöst von einem Verfahren mit den Merkmalen des Anspruchs 1. Ausführungen der Erfindung sind Gegenstand von Unteransprüchen.

Kennzeichnend an der Erfindung ist, daß die atmosphärische Luft auf einen Betriebsdruck der Trocknung und Reinigung verdichtet wird, wobei je nach Feuchtigkeit der Luft ein Teil der Feuchte kondensiert und aus dem Luftstrom als Wasser abgeschieden wird, und daß mindestens eine Restfeuchte der Luft und die Verunreinigungen durch physikalische Wäsche entfernt werden. Die Wäsche hat den Vorteil, Umschaltverluste und Temperaturschwankungen der Eintrittsluft in den Tieftemperaturteil der LZA, wie sie beim Betrieb von Revex, Geltrocknern und Adsorbern beim Regenerieren auftreten, zu vermeiden. Bei chemischen Wäschen wie einer Laugenwäsche ist als Nachteil anzuführen, daß die Lauge durch chemische Bindung von Verunreinigungen verbraucht und durch die aus der Luft aufgenommene Feuchte verdünnt wird. Entsprechende Mengen an Lauge müssen in Behältern bereitgestellt und die entstehende Ablauge muß erst gespeichert und dann entsorgt werden. Die physikalische Wäsche hingegen erfordert nur eine geringe Abschlämmung von Waschflüssigkeit und entsprechend weniger Zusatzwaschmittel zum Ausgleich von Verlusten, da die Feuchte und die Verunreinigung der Luft im Waschmittel gelöst und anschließend wieder ausgetrieben werden.

Bei einer vorteilhaften Ausgestaltung des erfindungsgemäßen Verfahrens wird bei der physikalischen Wäsche mindestens ein organisches Waschmittel, bevorzugt mit mindestens einer Komponente aus der Gruppe der Alkohole, Diole, substituierten Alkohole, Fluorkohlenwasserstoffe und der alkylierten Aromaten, verwendet. Organische Waschmittel besitzen eine gute Löslichkeit für Kohlenwasserstoffe, Wasser und auch für Stickoxide.

Ein vorteilhaft einsetzbares organisches Waschmittel enthält beispielsweise Ethylenglykol und/oder Propylbenzol und/oder Methoxyethanol.

Bei der Trocknung und Reinigung kann eine Wäsche mit nur einem Waschmittel verwendet werden. Bei einer solchen Ausgestaltung des Verfahrens besitzt die entsprechende Anlage die geringste Anzahl von Komponenten.

Bei der Trocknung und Reinigung können auch zwei separate physikalische Wäschen in Reihe mit jeweils unterschiedlichen Waschmitteln verwendet werden. Die Anzahl der für eine Anlage benötigten Komponenten ist zwar größer als bei der Verwendung nur eines Waschmittels. Bei der Verwendung zweier Waschmittel mit einer besonders guten Löslichkeit für jeweils einen Teil der Verunreinigungen lassen sich jedoch die Größe der Komponenten und der Energieverbrauch der Reinigung optimieren. Dieser Aspekt ist bei großen Anlagen besonders wichtig.

In der in Strömungsrichtung der Luft ersten Wäsche kann beispielsweise hauptsächlich Feuchte ausgewaschen werden. Dies vereinfacht die Auswahl eines Waschmittels für die Trocknung.

Das Waschmittel der ersten Wäsche kann mindestens einen Alkohol und/oder Glykol und/oder Methoxyethanol enthalten. Dieses Waschmittel ist für die Trocknung der Luft besonders geeignet.

In der in Strömungsrichtung der Luft zweiten Wäsche können hauptsächlich die Verunreinigungen ausgewaschen werden. Es erleichtert die Auswahl eines Waschmittels für die Verunreinigungen, wenn eine Trocknung der Luft nicht mehr vorgenommen werden muß, da sie bereits in der ersten Wäsche erfolgt ist.

Das Waschmittel der zweiten Wäsche kann mindestens einen alkylierten Aromaten und/oder Flurorkohlenwasserstoff und/oder Methoxyethanol enthalten. Dieses Waschmittel besitzt eine gute Löslichkeit für Kohlendioxid, Kohlenwasserstoffe und Stickoxide und ist deshalb für die Entfernung von Verunreinigungen aus der Luft besonders geeignet.

Das bei der jeweiligen Wäsche mit Feuchte und/oder den Verunreinigungen beladene Waschmittel kann regeneriert, gekühlt und wieder in die Wäsche rezykliert werden. Auf diese Art sind die Waschmittelverluste, der Waschmittelverbrauch und die Menge von zu entsorgendem Waschmittel besonders gering.

Das Waschmittel kann zum Regenerieren in eine in ihrem Sumpf beheizte Regenerierkolonne aufgegeben und im Gegenstrom ein Regeneriergas, vorzugsweise Stickstoff, geführt werden, wobei durch dieses Gas die Feuchte und/oder die Verunreinigung aufgenommen und an die Atmosphäre geleitet werden. Das Regeneriergas erleichtert das Austreiben der Feuchte und der Verunreinigungen aus dem Waschmittel.

Der Sumpf der jeweiligen Regenerierkolonne kann durch indirekten Wärmeaustausch mit erfindungsgemäß verdichteter und dabei angewärmter Luft beheizt werden. Der Vorteil besteht darin, daß durch die Nutzung der bei der Verdichtung der atmosphärischen Luft anfallenden Wärme Energiekosten für eine Beheizung entfallen.

Das erfindungsgemäße Verfahren kann bei der Trocknung und Reinigung eines Eintrittsluftstromes einer Luftzerlegungsanlage verwendet werden. Die vollständige Entfernung auch von Stickstoffmonoxid und Methan ist in einer LZA besonders wichtig, wenn hochreine Produkte erzeugt werden sollen. Außerdem können in einer solchen Reinigung große Luftmengen mit geringem Druckabfall verarbeitet werden.

Bei dieser Verwendung kann außerdem Xenon aus einem bei der physikalischen Wäsche anfallenden beladenen Regeneriergasstrom gewonnen werden. Dieser Regeneriergasstrom enthält nämlich neben den unerwünschten Verunreinigungen der atmosphärischen Luft auch Spuren des Edelgases Xenon aus der Luft. Das Xenon reichert sich im Regeneriergas an und kann insbesondere in größeren physikalischen Wäschen kostengünstig aus dem Regeneriergas abgetrennt werden.

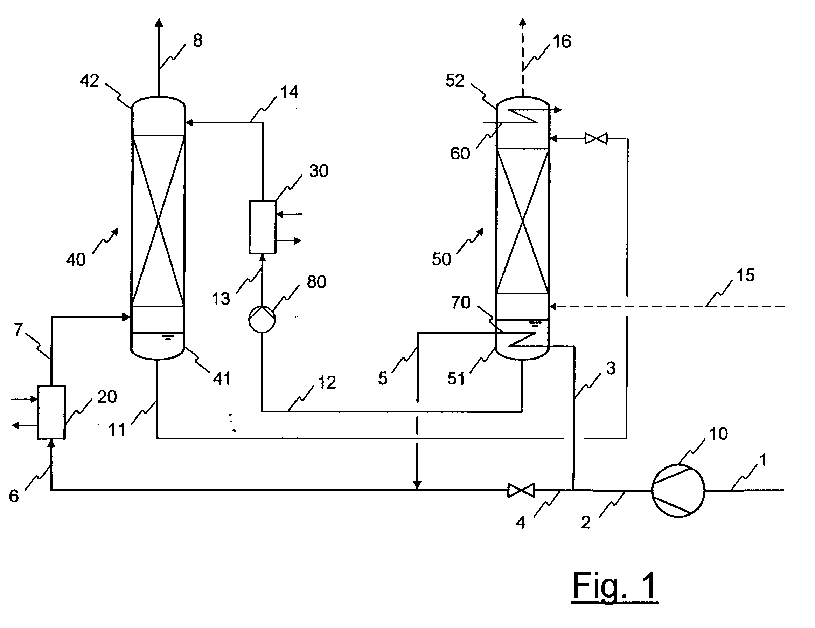

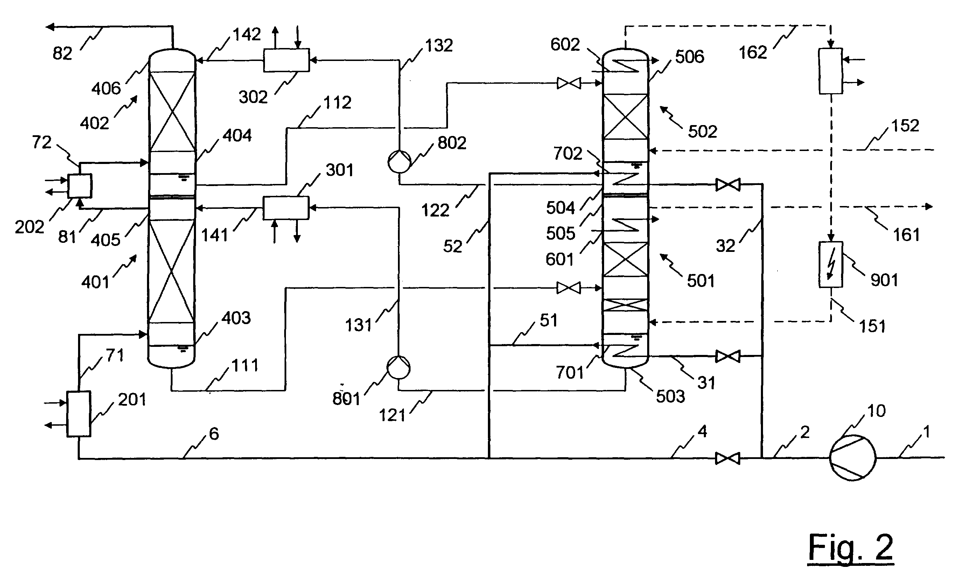

Die Erfindung wird anhand von zwei Ausführungsformen mit je einer Figur näher erläutert. Figur 1 zeigt eine erfindungsgemäße Trocknung und Reinigung mit einer einzigen Wäsche. Figur 2 zeigt eine erfindungsgemäße Trocknung und Reinigung mit zwei Wäschen.

### Figur 1

Atmosphärische Luft 1 wird in einem Kompressor 10 verdichtet; beispielsweise auf einen Prozeßdruck einer der Trocknung und Reinigung nachgeschalteten Luftzerlegungsanlage (in Figur 1 nicht dargestellt). Die komprimierte Luft 2 spaltet in zwei Ströme auf, von denen ein erster Teilstrom 3 einem Sumpfverdampfer 70 einer Regenerierkolonne 50 zugeführt wird.

Ein zweiter Teilstrom 4 wird an der Regenerierkolonne 50 vorbeigeführt und dem im Sumpfverdampfer 70 gekühlten ersten Teilstrom 5 beigemischt.

Der Mischstrom 6 wird in einer Kühleinrichtung 20 auf eine Temperatur abgekühlt, die etwa zwischen 0° und 30° C liegt, und ein gekühlter Luftstrom 7 über einem Sumpf 41 einer Waschkolonne 40 in diese Kolonne 40 eingespeist. An einem Kopf 42 dieser Kolonne 40 wird ein Waschmittel 14, beispielsweise Propylbenzol oder Methoxyethanol eingespeist, mit dem Ziel, Feuchtigkeit und Verunreinigungen der Luft, wie H₂O, CO₂, Kohlenwasserstoffe (CₓH_{y}) oder Stickoxide (NOₓ), aus dem gekühlten Luftstrom 7 durch physikalische Wäsche zu entfernen. Eine gereinigte Luft 8 wird bei etwa der Eintrittstemperatur des Waschmittels 14 am Kopf 42 der Kolonne 40 und ein Waschmittelstrom 11 mit der Feuchte und den Verunreinigungen der Luft bei etwa der Eintrittstemperatur des Luftstromes 7 aus dem Sumpf 41 der Kolonne 40 abgezogen und auf einen Kopf 52 oder einen unteren Abschnitt der Regenerierkolonne 50 isenthalp entspannt. Der Arbeitsdruck der Regenerierkolonne 50 richtet sich vorzugsweise nach dem Vordruck eines in die Kolonne 50 einzuspeisenden Regeneriergasstromes 15 und liegt beispielsweise zwischen 1,0 und 1,5 bar. Der Regeneriergasstrom 15 wird am Sumpf 51 der Kolonne 50 zugegeben. Er ist frei von Verunreinigungen, wie sie in der atmosphärischen Luft vorliegen. Der Regeneriergasstrom 15 kann zum Beispiel durch indirekten Wärmeaustausch mit dem komprimierten Luftstrom 2 und/oder durch einen Elektroerhitzer angewärmt werden (in Figur 1 nicht dargestellt).

Durch Rektifikation werden die im Vergleich zum Waschmittel leichter flüchtigen Verunreinigungen aus dem Lösungsmittel ausgetrieben und mit dem Regeneriergasstrom 16 am Kopf 52 der Kolonne 50 ausgeschleust. Zur Erhöhung des Kolonnenumsatzes ist bei manchen Waschmitteln eine Kopfkühlvorrichtung 60 notwendig.

Ein regeneriertes Waschmittel 12 wird dem Sumpf der Säule entnommen und über eine Pumpe 80 und eine anschließende Kühlvorrichtung 30 auf den Kopf 42 der Waschkolonne 40 gedrückt (Strom 13 und 14). Verluste im Lösungsmittelkreislauf werden durch einen Make up - Strom beglichen (in Figur 1 nicht dargestellt).

Alternativ (in Figur 1 nicht dargestellt) kann es auch günstig sein, das Verfahren ohne Regeneriergas (Regeneriergasströme 15 und 16) zu betreiben. Der beladene Waschmittelstrom 11 wird hierzu in einen mittleren Abschnitt der Regenerierkolonne 50 eingespeist, gelangt in den Sumpf dieser Kolonne 50 und wird dort auf Grund seiner leichten Flüchtigkeit bevorzugt verdampft. Der aufsteigende Waschmitteldampf wird am Kopf der Kolonne 50 kondensiert und von dort der Waschkolonne 40 zugeleitet (Waschmittelströme 12, 13 und 14). Die Verunreinigungen der Luft werden mit der Sumpfflüssigkeit ausgeschleust. Spuren des Waschmittels können nötigenfalls vor der Ausschleusung zurückgewonnen werden.

### Figur 2:

Atmosphärische Luft 1 wird in einem Kompressor 10 verdichtet, beispielsweise auf einen Prozeßdruck einer der Trocknung und Reinigung nachgeschalteten Luftzerlegungsanlage (in Figur 2 nicht dargestellt).
Die komprimierte Luft 2 spaltet in drei Ströme auf, von denen ein erster Teilstrom 31 einem Sumpfverdampfer 701 einer ersten Regenerierkolonne 501 und ein zweiter Teilstrom 32 einem Sumpfverdampfer 702 einer zweiten Regenerierkolonne 502 zugeführt werden. Ein dritter Teilstrom 4 wird an den Regenerierkolonnen 501 und 502 vorbeigeführt und den in den Sumpfverdampfern 701 und 702 gekühlten Teilströmen 51 und 52 beigemischt.

Der Mischstrom 6 wird in einer Kühleinrichtung 201 auf eine Temperatur abgekühlt, die etwa zwischen 0° und 30° C liegt, und als Luftstrom 71 über einem Sumpf 403 einer ersten Waschkolonne 401 eingespeist. An einem Kopf 405 dieser Kolonne 401 wird ein erstes Waschmittel 141 Aethylenglykol eingespeist, mit dem Ziel, vorzugsweise H₂O aus dem Luftstrom 71 durch physikalische Wäsche zu entfernen. Wasserfreie Luft 81 wird bei etwa der Eintrittstemperatur des Waschmittelstromes 141 am Kopf 405 der Kolonne 401 und ein Waschmittelstrom 111 mit der H₂O - Verunreinigung bei etwa der Eintrittstemperatur des Luftstromes 71 am Sumpf 403 der Kolonne 401 als Strom 111 abgezogen und auf einen Kopf (in Figur 2 nicht dargestellt) oder einen unteren Abschnitt der ersten Regenerierkolonne 501 isenthalp entspannt. Der Arbeitsdruck dieser Regenerierkolonne 501 richtet sich vorzugsweise nach dem Vordruck eines Regeneriergasstromes 151 und liegt beispielsweise zwischen 1,0 und 1,5 bar. Der Regeneriergasstrom 151 wird an einem Sumpf 503 der Kolonne 501 zugespeist und ist wasserfrei. Der Strom 151 kann durch indirekten Wärmeaustausch mit dem komprimierten Luftstrom 2 (in Figur 2 nicht dargestellt) und/oder durch einen Elektroerhitzer 901 angewärmt werden.

Durch Rektifikation werden die gegenüber dem ersten Waschmittel leichter flüchtigen Verunreinigungen inklusive H₂O mit dem Regeneriergasstrom 161 am Kopf 505 der Kolonne 501 ausgeschleust. Zur Erhöhung des Kolonnenumsatzes ist bei manchen Waschmitteln eine Kopfkühlvorrichtung 601 notwendig.

Ein regeneriertes Waschmittel 121 wird dem Sumpf 503 der Kolonne 501 entnommen und über eine erste Pumpe 801 und eine anschließende Kühlvorrichtung 301 auf einen Kopf 405 der Waschkolonne 401 gedrückt (Strom 131 und 141).
Die wasserfreie Luft 81 aus der Waschkolonne 401 wird in einer zweiten Kühleinrichtung 202 auf eine Temperatur abgekühlt, die etwa der Kondensationstemperatur von CO₂ oder einer anderen Luftverunreinigung entspricht, und als abgekühlter wasserfreier Luftstrom 72 einem Sumpf 404 einer zweiten Waschkolonne 402 zugeführt. Am Kopf dieser Kolonne 402 wird als zweites Waschmittel 142 Propylbenzol eingespeist, mit dem Ziel, die Restverunreinigungen aus der wasserfreien Luft 72 durch physikalische Wäsche zu entfernen.
Gereinigte Luft 82 wird bei etwa der Eintrittstemperatur des Waschmittels 142 am Kopf 406 der Kolonne 402 und Lösungsmittel 112 mit den Restverunreinigungen bei etwa der Eintrittstemperatur des Luftstromes 72 am Sumpf 404 der Kolonne 402 abgezogen und auf einen unteren Abschnitt (in der Figur 2 nicht dargestellt) oder auf einen Kopf der zweiten Regenerierkolonne 502 isenthalp entspannt. Der Arbeitsdruck dieser Regenerierkolonne 502 richtet sich vorzugsweise nach dem Vordruck eines Regeneriergasstromes 152 und liegt beispielsweise zwischen 1,0 und 1,5 bar. Der Regeneriergasstrom 152 wird über einem Sumpf 504 der Kolonne 502 zugespeist und ist frei von den Luftverunreinigungen. Der Strom 152 kann zum Beispiel durch indirekten Wärmeaustausch mit dem komprimierten Luftstrom 2 (in Figur 2 nicht dargestellt) und/oder durch einen Elektroerhitzer (in Figur 2 ebenfalls nicht dargestellt) angewärmt werden.

Durch Rektifikation werden die gegenüber dem zweiten Waschmittel leichter flüchtigen Verunreinigungen mit dem Regeneriergasstrom 162 am Kopf 506 der Kolonne 502 ausgeschleust. Zur Erhöhung des Säulenumsatzes ist bei manchen Waschmitteln eine Kopfkühlvorrichtung 602 notwendig.

Ein regeneriertes zweites Lösungsmittel 122 wird dem Sumpf 504 der Kolonne 502 entnommen und über eine zweite Pumpe 802 und eine anschließende Kühlvorrichtung 302 auf den Kopf 406 der zweiten Waschkolonne 402 gedrückt (Strom 132 und 142). Verluste in den beiden Lösungsmittelkreisläufen werden durch Make up - Ströme beglichen (in Figur 2 nicht dargestellt).

### Beispiel:

Für die Ausgestaltung des erfindungsgemäßen Verfahrens nach Figur 2 mit Ethylenglykol als erstem Waschmittel und Propylbenzol als zweitem Waschmittel ergibt eine Modellrechnung mit Feuchtigkeit und den für die Rechnung angenommenen Verunreinigungen CO₂, N₂O und Ethylen (C₂H₄) die in der Tabelle angeführten Verfahrensdaten. Die erreichten Endreinheiten des gereinigten Luftstromes beziehen sich auf die angegebenen Waschmittelumsätze und Verfahrensdaten wie Druck und Temperatur und Annahmen über die Kolonnenauslegung. Im Anwendungsfall sind diese Daten Gegenstand einer für die spezifische Anwendung vorzunehmenden Optimierung.

**Tabelle**

| Verfahrensdaten für die Ausgestaltung des erfindungsgemäßen Verfahrens nach Figur 2 | | | | | | | | | |
|---|---|---|---|---|---|---|---|---|---|
| | | | | molare Anteile: Verunreinigung, Waschmittel | | | | | |
| Strom | Temperatur T[K] | Druck P[bar] | Durhsatz F [mol/s] | H₂O [ppm] | CO2 [ppm] | Ethylen C₂H₄ [ppm] | N₂O [ppm] | Ethylenglykol [ppm] | Propylbenzol [ppm] |
| 71 | 278,5 | 5,8 | 1241,2 | 1209 | 300 | 2 | 0,3 | 0 | 0 |
| 72 | 270,8 | 5,5 | 1239,6 | 0 | 300 | 2 | 0,3 | 0 | 0 |
| 82 | 180 | 5,5 | 1236,5 | 0 | 0,1 | 0,09 | 0,06 | 0 | 0,002 |
| 111 | 280 | 5,53 | 201,55 | 7444 | 5 | 0 | 0 | 992190 | 0 |
| 112 | 202 | 5,6 | 1002,8 | 0 | 371 | 2,5 | 0,7 | 0 | 996100 |
| 121 | 438,5 | 1,14 | 199,99 | 1,0 | 0 | 0 | 0 | 999870 | 0 |
| 122 | 203 | 1,2 | 1000 | 0 | 0,15 | 0,24 | 0,4 | 0 | 999240 |
| 141 | 268 | 5,5 | 200 | 1,0 | 0 | 0 | 0 | 999870 | 0 |
| 142 | 180 | 5,5 | 1000 | 0 | 0,15 | 0,24 | 0,4 | 0 | 999240 |
| 151 | 473 | 1,1 | 203,2 | 0 | 1830 | 11,2 | 1,5 | 0 | 0,18 |
| 152 | 300 | 1,1 | 200 | 0 | 0 | 0 | 0 | 0 | 0 |
| 161 | 278 | 1,1 | 201,9 | 7428 | 1842 | 11,3 | 1,5 | 1,0 | 0,18 |
| 162 | 200 | 1,1 | 203,2 | 0 | 1830 | 11,2 | 1,5 | 0 | 0,18 |

## Patentansprüche

1. Verfahren zur Trocknung und Reinigung atmosphärischer Luft, wobei die Luft neben Feuchtigkeit an Verunreinigungen hauptsächlich Kohlendioxid, Kohlenwasserstoffe und Stickoxide enthält, **dadurch gekennzeichnet**, daß die atmosphärische Luft auf einen Betriebsdruck der Trocknung und Reinigung verdichtet wird, wobei je nach Feuchtigkeit der Luft ein Teil der Feuchte kondensiert und aus dem Luftstrom als Wasser abgeschieden wird, und daß mindestens eine Restfeuchte der Luft und die Verunreinigungen durch physikalische Wäsche entfernt werden.

2. Verfahren nach Anspruch 1, dadurch gekennzeichnet, daß bei der physikalischen Wäsche mindestens ein organisches Waschmittel, bevorzugt mit mindestens einer Komponente aus der Gruppe der Alkohole, Diole, substituierten Alkohole, Flurkohlenwasserstoffe und der alkylierten Aromaten, verwendet wird.

3. Verfahren nach Anspruch 2, dadurch gekennzeichnet, daß ein solches Waschmittel Ehtylenglykol und/oder Propylbenzol und/oder Methoxyethanol enthält.

4. Verfahren nach einem der Ansprüche 1 bis 3, dadurch gekennzeichnet, daß bei der Trocknung und Reinigung eine Wäsche mit nur einem Waschmittel verwendet wird.

5. Verfahren nach einem der Ansprüche 1 bis 3, dadurch gekennzeichnet, daß bei der Trocknung und Reinigung zwei separate physikalische Wäschen in Reihe mit jeweils unterschiedlichen Waschmitteln verwendet werden.

6. Verfahren nach Anspruch 5, dadurch gekennzeichnet, daß in der in Strömungsrichtung der Luft ersten Wäsche hauptsächlich Feuchte ausgewaschen wird.

7. Verfahren nach Anspruch 6, dadurch gekennzeichnet, daß das Waschmittel der ersten Wäsche mindestens einen Alkohol und/oder Glykol und/oder Methoxyethanol enthält.

8. Verfahren nach Anspruch 5, dadurch gekennzeichnet, daß in der in Strömungsrichtung der Luft zweiten Wäsche hauptsächlich die Verunreinigungen ausgewaschen werden.

9. Verfahren nach Anspruch 8, dadurch gekennzeichnet, daß das Waschmittel der zweiten Wäsche hauptsächlich mindestens einen alkylierten Aromaten und/oder Fluorkohlenwasserstoff und/oder Methoxyethanol enthält.

10. Verfahren nach einem der Ansprüche 1 bis 9, dadurch gekennzeichnet, daß das bei der jeweiligen Wäsche mit Feuchte und/oder den Verunreinigungen beladene Waschmittel regeneriert, gekühlt und wieder in die Wäsche rezykliert wird.

11. Verfahren nach Anspruch 10, dadurch gekennzeichnet, daß zum Regenerieren das Waschmittel in eine in ihrem Sumpf beheizte Regenerierkolonne aufgegeben und im Gegenstrom ein Regeneriergas geführt wird, wobei durch dieses Gas die Feuchte und/oder die Verunreinigungen aufgenommen und an die Atmosphäre geleitet werden.

12. Verfahren nach Anspruch 11, dadurch gekennzeichnet, daß der Sumpf der jeweiligen Regenerierkolonne durch indirekten Wärmeaustausch mit gemäß Anspruch 1 verdichteter und dabei angewärmter Luft beheizt wird.

13. Verwendung des Verfahrens nach einem der Ansprüche 1 bis 12 zur Trocknung und Reinigung eines Eintrittsluftstromes einer Luftzerlegungsanlage.

14. Verwendung nach Anspruch 13 mit einer Gewinnung von Xenon aus einem bei der physikalischen Wäsche anfallenden beladenen Regeneriergasstrom.
